# EUROPEAN PATENT SPECIFICATION

(11) **EP 4 485 661 B1**
(45) Date of publication and mention of the grant of the patent: **07.10.2026**
(21) Application number: 23217433.4
(22) Date of filing: 18.12.2023
(51) Int. Cl.: H01M 50/367, H01M 50/383, H01M 50/392, H01M 50/289, H01M 50/375, H01M 50/209

(54) **BATTERY PACK**
BATTERIEPACK
BLOC-BATTERIE

(30) Priority: 28.06.2023 CN 202321670812 U
(43) Date of publication of application: 01.01.2025
(73) Proprietor: AESC Dynamics Technology (Jiangsu) Ltd., 214443 Wuxi City, Jiangsu Province (CN); AESC Dynamics Technology (Hubei) Ltd., Shiyan, Hubei Province 442002 (CN); AESC Dynamics Technology (Ordos) Ltd., Ordos, Inner Mongolia Autonomous Region 017200 (CN); AESC Dynamics Technology (Hebei) Ltd., Cangzhou City, Hebei Province 061758 (CN); AESC Intelligent Innovation Dynamics Technology (Shanghai) Ltd., Shanghai 201315 (CN)
(72) Inventor: WU, Hang, Shanghai 201315 (CN); CHEN, Zhuolie, Shanghai 201315 (CN); CUI, Xin, Shanghai 201315 (CN); YUAN, Zhuchen, Shanghai 201315 (CN); WU, Changjun, Shanghai 201315 (CN); HE, Yafei, Jiangyin City, Wuxi City 201315 (CN)
(74) Representative: Becker, Eberhard

(56) References cited:
- EP-A1- 3 910 699
- US-A1- 2019 006 650

## Description

### BACKGROUND

### Technical Field

The disclosure belongs to the technical field of power batteries, and in particular, relates to a battery pack.

### Description of Related Art

Lithium-ion batteries are widely used in various fields such as transportation and energy storage. Generally, in order to meet the needs of use, lithium cells are connected in series, in parallel, or a combination of both to form groups. However, cells are prone to thermal runaway under mechanical abuse, electrical abuse, and thermal abuse alone or in combination. The main manifestation of a cell that experiences thermal runaway is a series of internal chain reactions and a sharp rise in temperature. The decomposition and regeneration of the solid electrolyte interface (SEI) film and the vaporization of the electrolyte will cause the internal pressure of the cell to increase. When the internal pressure of the cell reaches the opening pressure of the safety valve of the cell, the cell will emit a large amount of gas and particulate matter. The particulate matter herein mainly includes liquid droplets, graphite, nickel oxide, and copper foil, and the gas and particulate matter will then be discharged out of the battery pack through the explosion-proof valve. The high-temperature particulate matter discharged with the gas may ignite the high-temperature flue gas, causing a fire outside the battery pack, so this risk can seriously threaten the safety of people's lives and property.

At present, a common gas-solid separation method is to add a filter to the battery pack to block high-temperature particulates. However, using a filter to block high-temperature particulates has many disadvantages. After thermal runaway occurs in a cell, especially when thermal runaway spreads, a large amount of matter will be ejected from the cell. If the pore size of the filter is excessively small, the filter may be easily clogged, causing poor exhaust in the battery pack, but if the pore size of the filter is excessively large, the filter may not be able to intercept high-temperature particulates.

EP 3910699 A1 relates to a battery system for separating solid matter from venting gas in case of a thermal runaway. US 2019/006650 A1 relates to systems and methods for controlling the emission of gases and/or flames emitted from electrochemical cells, in which gas emitted from an electrochemical cell located within an interior of an enclosure is flowed through a flow restriction to reduce a pressure and/or temperature of the gas and/or the gas is flowed through a catalyst prior to exiting through an outlet of the enclosure.

### SUMMARY

The invention is set out in the appended set of claims. The following disclosure serves a better understanding of the present invention. In view of the abovementioned shortcomings of the related art, the disclosure provides a battery pack aiming to solve the problem of poor exhaust inside the battery pack or fire outside the battery pack caused by the difficulty in separating particulate matter in flue gas after thermal runaway occurs in a cell in the related art, so as to improve the safety performance of the battery pack.

To achieve the above, the disclosure provides a battery pack including a box body and an upper cover. The box body has a cell installation compartment and an exhaust compartment. The upper cover covers the box body and has a gas-solid separation flow channel adapted to centrifugally separate gas from particulate matter in flue gas flowing through the gas-solid separation flow channel. A gas inlet of the gas-solid separation flow channel communicates with the cell installation compartment, and a gas outlet of the gas-solid separation flow channel communicates with the exhaust compartment.

Optionally, the gas-solid separation flow channel is located on a same plane.

Optionally, the plane where the gas-solid separation flow channel is located is perpendicular to a height direction of the box body.

Optionally, the gas-solid separation flow channel includes a plurality of separation flow channel sections communicating with each another. The separation flow channel sections in sequence are connected end to end to form a spiral structure.

Optionally, the upper cover has solid storage compartments corresponding to the separation flow channel sections. Each of the solid storage compartments is located on a circumferential outer side of corresponding one of the separation flow channel sections and communicates with corresponding one of the separation flow channel sections.

Optionally, the gas inlet is located on an outer ring of the spiral structure, and the gas outlet is located on an inner ring of the spiral structure. A flow cross section of each of separation flow channel section decreases in order from being close to the gas inlet to being away from the gas inlet.

Optionally, a flow cross section of the gas-solid separation flow channel gradually decreases from an end close to the gas inlet to an end away from the gas inlet.

Optionally, the upper cover includes an upper plate, a lower plate, and a flow channel combination plate sandwiched between the upper plate and the lower plate. The gas-solid separation flow channel is arranged in the flow channel combination plate. The lower plate faces the box body, and an exhaust structure is arranged on a region of the lower plate covering the cell installation compartment. The exhaust structure communicates with the gas inlet.

Optionally, the flow channel combination plate includes a flow channel plate and a buffer plate arranged in a stack, and the flow channel plate is located between the upper plate and the buffer plate. A flow channel groove is arranged on a side of the flow channel plate facing the buffer plate. The buffer plate is connected to the flow channel plate, covers the flow channel groove, and is matched with the flow channel groove to define the gas-solid separation flow channel. A gas outlet end of the flow channel groove penetrates a side of the flow channel plate facing the upper plate to form the gas outlet. The buffer plate is provided with a first ventilation opening penetrating the buffer plate, and the first ventilation opening overlaps at least a portion of a gas inlet end of the flow channel groove to define the gas inlet.

Optionally, a buffer compartment is arranged on a side of the buffer plate facing the lower plate to cover the exhaust structure. A gas inlet end of the first ventilation opening penetrates an inner wall of the buffer compartment to communicate with the buffer compartment.

Optionally, each of the flow channel plate, the buffer plate, and the lower plate are provided with a second ventilation opening communicating with the exhaust compartment. A groove is arranged on a side of the upper plate facing the flow channel plate to communicate the gas outlet with the second ventilation opening on the flow channel plate. The flue gas in the cell installation compartment is discharged through the exhaust structure and sequentially flows through the buffer compartment, the first ventilation opening, and the gas-solid separation flow channel, and then enters the exhaust compartment through the second ventilation opening.

Optionally, a mica plate is arranged on a side of the lower plate facing the box body, and the mica plate is provided with a weak structure corresponding to the exhaust structure and an opening corresponding to the exhaust compartment.

Optionally, the box body has a chamber, and a partition is installed in the chamber. The partition divides the chamber into the cell installation compartment and the exhaust compartment. The cell installation compartment and the exhaust compartment communicate with each other only through the gas-solid separation flow channel when the upper cover covers the box body.

Optionally, an explosion-proof valve is included, and the explosion-proof valve is installed on the box body and is adapted to discharge gas in the exhaust compartment when in an open state.

As described above, beneficial effects provided by the battery pack of the disclosure at least include the following. By directly arranging the gas-solid separation flow channel on the upper cover, the separation of gas and particulate matter in the flue gas is achieved, and there is no need to arrange a separate gas-solid separation component. In this way, the structure is simplified and the costs are decreased. Further, the gas-solid separation flow channel can use centrifugal force to separate the gas from the particulate matter under the flow of flue gas. In this way, a good separation effect is provided, clogging is less likely to occur, and the safety performance of the battery pack is improved.

### BRIEF DESCRIPTION OF THE DRAWINGS

FIG. 1 is a schematic exploded view of a battery pack according to an embodiment of the disclosure.
FIG. 2 is a schematic view of an exhaust path of the battery pack in FIG. 1.
FIG. 3 is a schematic structural view of a box body in FIG. 1.
FIG. 4 is a bottom view of a flow channel plate in FIG. 1.
FIG. 5 is a top view of the flow channel plate in FIG. 1.
FIG. 6 is a top view of a buffer plate in FIG. 1.
FIG. 7 is a cross-sectional view taken along line A-A in FIG. 6.
FIG. 8 is a top view of an upper plate in FIG. 1.
FIG. 9 is a bottom view of the upper plate in FIG. 1.

### DESCRIPTION OF THE EMBODIMENTS

The implementation of the disclosure is illustrated below by specific embodiments. A person having ordinary skill in the art can easily understand other advantages and effects of the disclosure from the content disclosed in this specification.

it should be noted that the structures, scales, sizes, etc. shown in the accompanying drawings in the specification are only to be used together with the content disclosed in the specification for a person having ordinary skill in the art to comprehend and read, are not intended to define the defining conditions of the implementation of the disclosure, and therefore have no technical significance. Any structural modification, proportional relationship change, or size adjustment, without affecting the effects and objectives that can be achieved by the disclosure, should still fall within the scope of the technical content disclosed in the disclosure. Further, terms such as "upper", "lower", "left", "right", "middle", and "one" quoted in this specification are only for the convenience of description and are not used to define the applicable scope of the disclosure. The change or adjustment of its relative relationship should also be regarded as the applicable scope of the disclosure without substantive change of the technical content.

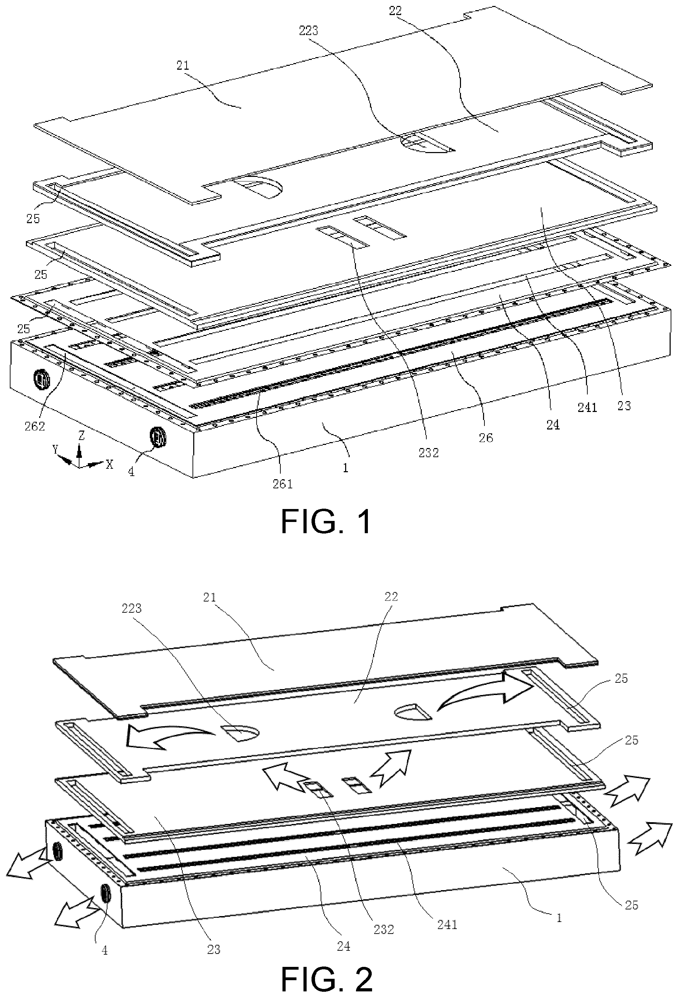

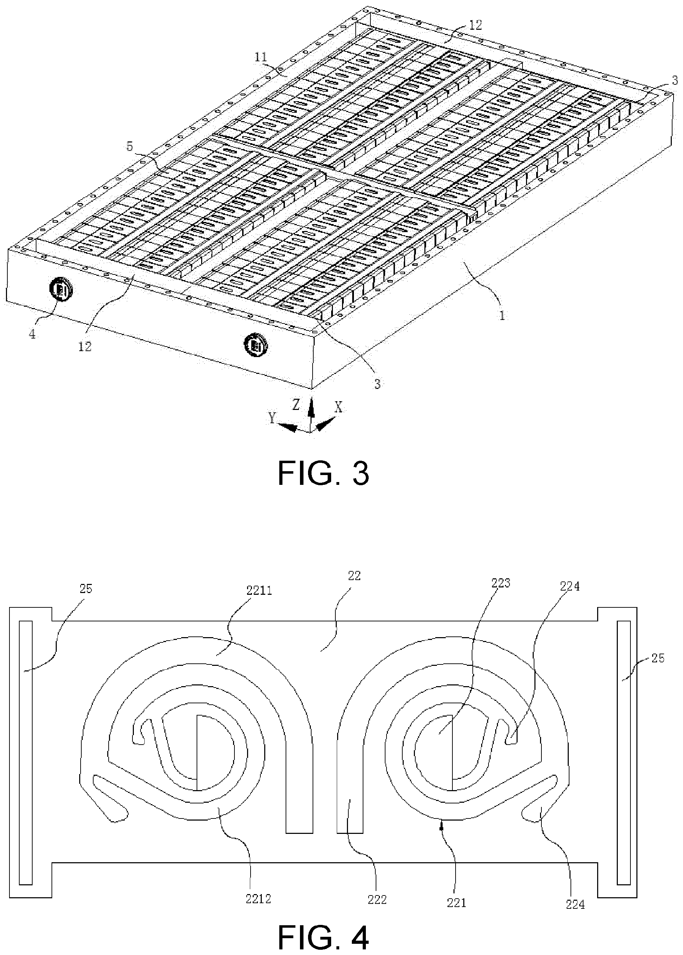

With reference to FIG. 1 to FIG. 4, in some optional embodiments, the disclosure provides a battery pack including a box body 1 and an upper cover 2. In addition to the above components, the battery pack may also include a cell 5 and/or an explosion-proof valve 4.

With reference to FIG. 1 to FIG. 4, in some optional embodiments, the box body 1 has a cell installation compartment 11 and an exhaust compartment 12, and the cell 5 is installed in the cell installation compartment 11. The upper cover 2 covers the box body 1 and has a gas-solid separation flow channel 221 adapted to centrifugally separate gas from particulate matter in flue gas flowing through the gas-solid separation flow channel 221. A gas inlet 222 of the gas-solid separation flow channel 221 communicates with the cell installation compartment 11, and a gas outlet 223 of the gas-solid separation flow channel 221 communicates with the exhaust compartment 12.

Optionally, the box body 1 has a chamber, and a partition 3 is installed in the chamber. The partition 3 divides the chamber into the cell installation compartment 11 and the exhaust compartment 12. Further, the cell installation compartment 11 and the exhaust compartment 12 communicate with each other only through the gas-solid separation flow channel 221 when the upper cover 2 covers the box body 1. That is, the upper cover 2 can cover an upper opening of the chamber to prevent the flue gas in the cell installation compartment 11 from directly entering the exhaust compartment 12. In this way, the flue gas in the cell installation compartment 11 needs to pass through the gas-solid separation flow channel 221 for gas-solid separation before entering the exhaust compartment 12. Furthermore, there may be two partitions 3, and the two partitions are spaced apart in a length direction of the box body 1 to separate two exhaust compartments 12. The cell installation compartment 11 is located between the two exhaust compartments 12, and gas-solid separation flow channels 221 on the upper cover 2 may also be arranged corresponding to the exhaust compartments 12 one by one. Certainly, the number of the gas-solid separation flow channels 221 and exhaust compartments 12 may also be adjusted according to needs. For instance, each exhaust compartment 12 corresponds to multiple gas-solid separation flow channels 221. Herein, the length direction of the box body 1 may be the X direction in the drawing.

Optionally the explosion-proof valve 4 is installed on the box body 1 and is adapted to discharge gas in the exhaust compartment 12 when in an open state. Further, the explosion-proof valve 4 is installed on a side wall of the box body 1. When the explosion-proof valve 4 is in the open state, the exhaust compartment 12 communicates with the outside of the box body 1, so that the gas in the exhaust compartment 12 may be discharged to the outside of the box body 1 through the explosion-proof valve 4.

Optionally, a mica patch and a mica wing are evenly distributed on a top surface of the cell 5 to protect the cell 5 and prevent the high-temperature flue gas from igniting an adjacent cell 5.

In the battery pack provided by the embodiments, by directly providing the gas-solid separation flow channel 221 on the upper cover 2, the gas and the particulate matter in the high-temperature flue gas are separated, so that the particulate matter remains in the battery pack. In this way, the particulate matter is prevented from being ejected outside the battery pack, igniting high-temperature gas, and causing a fire outside the battery pack, so safety performance is improved. Further, a gas-solid separation component does not need to be separately arranged, so the number of parts is reduced and the structure is simplified. The gas-solid separation flow channel 221 uses centrifugal force to separate the gas from the particulate matter, so a filter is prevented from clogging, and the reliability of gas-solid separation is ensured.

With reference to FIG. 1 to FIG. 4, in some optional embodiments, the gas-solid separation flow channel 221 is located on a same plane.

Optionally, the plane where the gas-solid separation flow channel 221 is located is perpendicular to a height direction of the box body 1. Herein, the height direction of the box body 1 may be a vertical direction, i.e., the Z direction in the drawing. That is, the gas-solid separation flow channel 221 may be located in a horizontal plane.

Optionally, the upper cover 2 and the box body 1 are arranged in the Z direction.

In the battery pack provided by the embodiments, the gas-solid separation flow channel 221 is located one the same plane, which is beneficial to improve the compactness of the structural layout. In particular, the arrangement in the same horizontal plane may reduce the space occupied in the height direction of the box body 1, so that an overall volume of the battery pack is reduced.

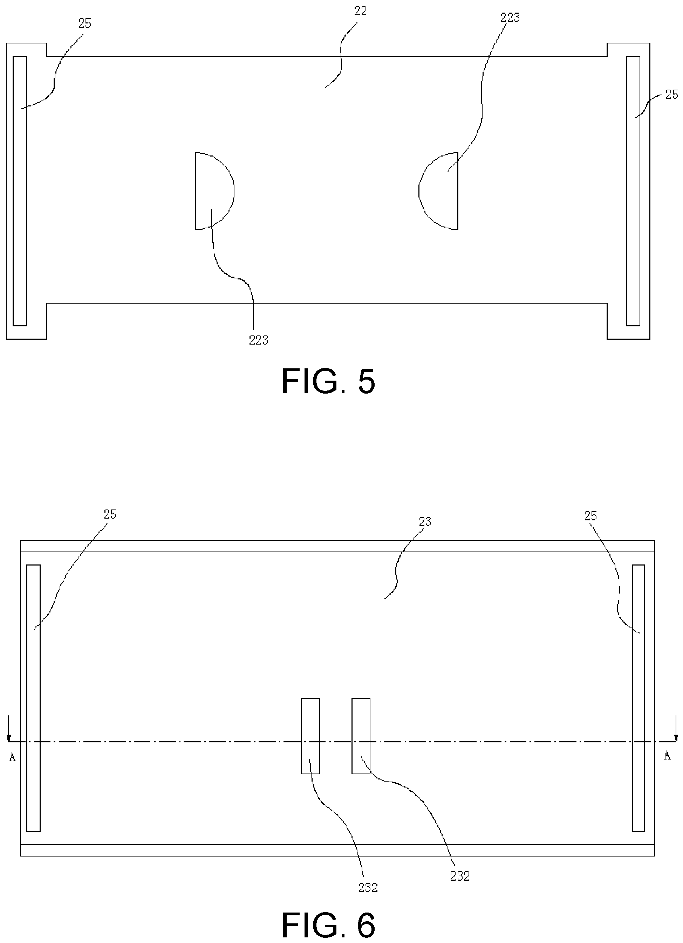

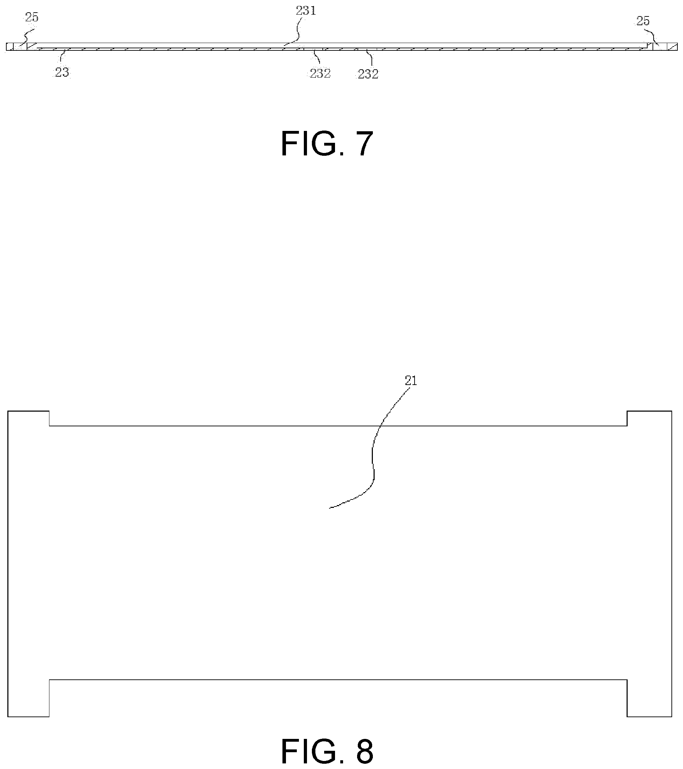

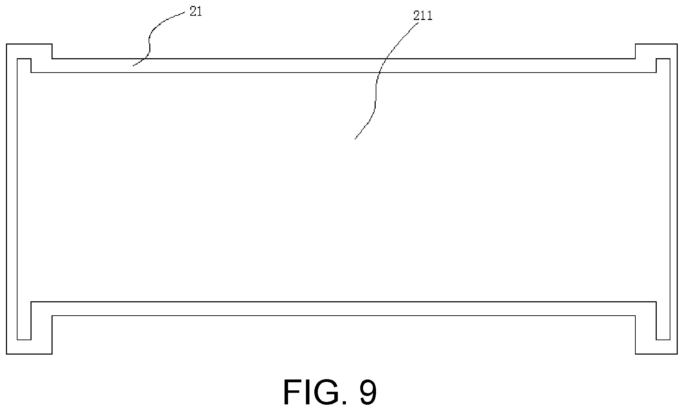

With reference to FIG. 1 to FIG. 9, in some optional embodiments, the upper cover 2 includes an upper plate 21, a lower plate 24, and a flow channel combination plate sandwiched between the upper plate 21 and the lower plate 24. The gas-solid separation flow channel 21 is arranged in the flow channel combination plate. The lower plate 24 faces the box body 1, that is, the lower plate 24 is located between the flow channel combination plate and the box body 1. Further, an exhaust structure 241 is provided on a region of the lower plate 24 covering the cell installation compartment 11, and the exhaust structure 241 communicates with the gas inlet 222. Herein, the exhaust structure 241 may be a through groove penetrating the lower plate 24 in the Z direction.

Optionally, the flow channel combination plate includes a flow channel plate 22 and a buffer plate 23 arranged in a stack, and the flow channel plate 22 is located between the upper plate 21 and the buffer plate 23. That is, the upper plate 21, the flow channel plate 22, the buffer plate 23, and the lower plate 24 may be stacked in sequence from top to bottom in the Z direction. Herein, a flow channel groove is arranged on a side of the flow channel plate 22 facing the buffer plat 23. The buffer plate 23 is connected to the flow channel plate 22, covers the flow channel groove, and is matched with the flow channel groove to define the gas-solid separation flow channel 221. A gas outlet end of the flow channel groove penetrates a side of the flow channel plate 22 facing the upper plate 21 to form the gas outlet 223. The buffer plate 23 is provided with a first ventilation opening 232 penetrating the buffer plate 23, and the first ventilation opening 232 overlaps at least a portion of a gas inlet end of the flow channel groove to define the gas inlet 222. The use of this structural design makes processing simpler and more convenient, reduces the difficulty of production and processing, and is conducive to improving production efficiency and product quality.

Optionally, a buffer compartment 231 is arranged on a side of the buffer plate 23 facing the lower plate 24 to cover the exhaust structure 241. A gas inlet end of the first ventilation opening 232 penetrates an inner wall of the buffer compartment 231 to communicate with the buffer compartment 231. After the flue gas in the cell installation compartment 11 is discharged from the exhaust structure 241, the flue gas first enters the buffer compartment 231 for buffering, and a flow velocity of the flue gas is reduced through the buffer compartment 231. The flue gas with reduced flow velocity is discharged from the first ventilation opening 232 and enters the gas inlet end of the flow channel groove.

Optionally, the flow channel plate 22, the buffer plate 23, and each of the lower plate 24 are provided with a second ventilation opening 25 communicating with the exhaust compartment 12. A groove 211 is arranged on a side of the upper plate 21 facing the flow channel plate 22 to communicate the gas outlet 223 with the second ventilation opening 25 on the flow channel plate 22. The flue gas in the cell installation compartment 11 is discharged through the exhaust structure 241 and sequentially flows through the buffer compartment 231, the first ventilation opening 232, and the gas-solid separation flow channel 221, and then enters the exhaust compartment 12 through the second ventilation opening 25. To be specific, the flue gas in the cell installation compartment 11 passes through the gas-solid separation flow channel 221 and then is discharged from the gas outlet 223 into the groove 211. The flue gas in the groove 211 sequentially passes through the second ventilation opening 25 on the flow channel plate 22, the second ventilation opening 25 on the buffer plate 23, and the second ventilation opening 25 on the lower plate 24 and then enters the exhaust compartment 12. Further, the groove 211 may be an "I"-shaped groove. Two ends of the "I"-shaped groove correspond to the second ventilation openings 25, so that the flue gas may enter the corresponding second ventilation openings 25 from both ends of the "I"-shaped groove, and gas exhaust efficiency is thus improved.

Optionally, a mica plate 26 is arranged on a side of the lower plate 24 facing the box body 1. The mica plate 26 has high temperature resistance, fire resistance, and flame retardant properties, so the mica plate 26 can protect the upper cover 2. The mica plate 26 is provided with a weak structure 261 corresponding to the exhaust structure 241 and an opening 262 corresponding to the exhaust compartment 12. Further, the weak structure 261 may be formed by thinning a partial region of the mica plate 26. Alternatively, the mica plate 261 may be a through groove that penetrates the mica plate 26 in the Z direction, so that the flue gas in the cell installation compartment 11may be discharged through the weak structure 261 and enter the gas inlet 222.

In the battery pack provided by the embodiments, the structure layout of the upper cover 2 and the box body 1 is compact, so only a small space is required to be occupied, and the overall volume of the battery pack is reduced. Further, the flue gas may flow according to a predetermined flowing path when flowing through the upper cover 2. In this way, directional exhaust is achieved, and the flue gas is prevented from impacting other weak portions of the upper cover 2, so that the risk of failure at the weak portions of the upper cover 2 is reduced, and the safety and reliability of the battery pack is improved.

With reference to FIG. 1, FIG. 2, FIG. 4, and FIG. 5, in some optional embodiments, the gas-solid separation flow channel 221 includes a plurality of separation flow channel sections communicating with each another. The separation flow channel sections in sequence are connected end to end to form a spiral structure. The structure of the separation flow channel sections is not only compact in layout, but also allows the flue gas to perform circular motion when flowing through the gas-solid separation flow channel 221, so that separation of gas and particulate matter is achieved. Herein, the gas and the particulate matter in the flue gas have different weights. The gas-solid separation flow channel 221 may separate the gas from the particulate matter in the flue gas by utilizing the difference in centrifugal force that the flue gas receives when the flue gas performs circular motion. It should be understood that the flue gas is not limited to circular motion. For instance, the separation flow channel sections are connected and forms a wavy structure, and the centrifugal force of the flue gas may also be used to separate the gas from the particulate matter during the continuous turning process.

Optionally, the upper cover 2 has solid storage compartments 224 corresponding to the separation flow channel sections. Each solid storage compartment 224 is located on a circumferential outer side of the corresponding separation flow channel section and communicates with the corresponding separation flow channel section, so that the particulate matter separated from the corresponding separation flow channel section may be stored in the corresponding solid storage compartment 224.

Optionally, the gas inlet 222 is located on an outer ring of the spiral structure, and the gas outlet 223 is located on an inner ring of the spiral structure. Further, a flow cross section of each separation flow channel section decreases in order from being close to the gas inlet 222 to being away from the gas inlet 222. That is, an area of the flow cross section of the separation flow channel section close to the gas inlet 222 is greater than the area of the flow cross section of the separation flow channel section away from the gas inlet 222. In this way, the flow velocity of the flue gas gradually increases from the direction close to the gas inlet 222 to the direction away from the gas inlet 222. Controlling the flow velocity of flue gas by changing the area size of the flow cross section is beneficial to the separation of gas and particulate matter, and the probability of the particulate matter being ejected from the explosion-proof valve 4 is also reduced. Further, a flow cross section of the gas-solid separation flow channel 221 gradually decreases from an end close to the gas inlet 222 to an end away from the gas inlet 222. That is, the area of the flow cross section of each separation flow channel section gradually decreases from the end close to the gas inlet 222 to the end away from the gas inlet 222. The area of the flow cross section at the connection between two adjacent separation flow channel sections also gradually transitions smoothly.

Optionally, the number of the separation flow channel sections is two. The separation flow channel sections include a primary separation flow channel section 2211 and a secondary separation flow channel section 2212. The high-temperature flue gas completes the first separation of high-temperature gas and high-temperature particulate matter in the primary separation flow channel section 2211, and the high-temperature particulate matter separated for the first time is stored in the solid storage compartment 224 corresponding to the primary separation flow channel section 2211. In this step, larger particulate matter, that is, heavier particulate matter, in the high-temperature flue gas can be separated. Next, the remaining high-temperature gas and high-temperature particulate matter enter the secondary separation flow channel section 2212 to complete the second separation of high-temperature flue gas and high-temperature particulate matter. The high-temperature particulate matter separated for the second time is stored in the solid storage compartment 224 corresponding to the secondary separation flow channel section 2212. The separated flue gas after this step is discharged from the gas-solid separation flow channel 221 through the gas outlet 223, and at this moment, the separation of gas and particulate matter in the high-temperature flue gas is completed. It can be understood that the number of separation flow channel sections may be set according to needs and can be one section, two sections, or more than two sections, and this number is not limited to two as mentioned in the embodiments. The working principles of the separation flow channel sections with different numbers of sections are the same, so description thereof is not repeated herein.

In the battery pack provided by the embodiments, the separation of gas and particulate matter is achieved by changing the area of the flow cross section of the gas-solid separation flow channel 221 to change the flow velocity of the flue gas, and/or the separation of gas and particulate matter is achieved through the centrifugal motion of the flue gas. In this way, the particulate matter is prevented from being discharged out of the battery pack along with the gas, and that the risk of fire caused by the particulate matter outside the battery pack is reduced.

In the battery pack provided by the disclosure, by arranging the gas-solid separation flow channel 221 on the upper cover 2, the gas and the particulate matter in the flue gas are separated while the structure is simplified. In this way, the safety performance of the battery pack is improved, the costs of the battery pack are reduced, and the overall volume of the battery pack is decreased.

In the description of the specification, descriptions with reference to the terms such as "this embodiment", "examples", "specific examples", etc. means that the specific features, structures, materials, or characteristics described in combination with the embodiment(s) or example(s) are included in at least one embodiment or example of the disclosure. In the specification, the schematic representation of the above-mentioned terms does not necessarily refer to the same embodiment or example.

The above-mentioned embodiments illustrate the principles and effects of the disclosure.

### List of Reference Numerals

1: box body,
11: cell installation compartment,
12: exhaust compartment,
2: upper cover,
21: upper plate,
211: groove,
22: flow channel plate,
221: gas-solid separation flow channel,
2211: primary separation flow channel section,
2212: secondary separation flow channel section,
222: gas inlet,
223: gas outlet,
224: solid storage compartment,
23: buffer plate,
231: buffer compartment,
232: first ventilation opening,
24: lower plate,
241: exhaust structure,
25: second ventilation opening,
26: mica plate,
261: weak structure,
262: opening,
3: partition,
4: explosion-proof valve,
5: cell.

## Claims

1. A battery pack, comprising:
a box body (1) having a cell installation compartment (11) and an exhaust compartment (12); and
an upper cover (2) covering the box body (1) and having a gas-solid separation flow channel (221) adapted to centrifugally separate gas from particulate matter in flue gas flowing through the gas-solid separation flow channel (221), wherein a gas inlet (222) of the gas-solid separation flow channel (221) communicates with the cell installation compartment (11), and a gas outlet (223) of the gas-solid separation flow channel (221) communicates with the exhaust compartment (12).

2. The battery pack according to claim 1, wherein the gas-solid separation flow channel (221) is located on a plane.

3. The battery pack according to claim 2, wherein the plane where the gas-solid separation flow channel (221) is located is perpendicular to a height direction of the box body (1).

4. The battery pack according to any one of claims 1 to 3, wherein the gas-solid separation flow channel (221) comprises a plurality of separation flow channel sections (2211, 2212) communicating with each other, and the separation flow channel sections (2211, 2212) in sequence are connected end to end to form a spiral structure.

5. The battery pack according to claim 4, wherein the upper cover (2) has solid storage compartments (224)
corresponding to the separation flow channel sections (2211, 2212), and each of the solid storage compartments (224)
is located on a circumferential outer side of corresponding one of the separation flow channel sections (2211, 2212) and communicates with corresponding one of the separation flow channel sections (2211, 2212).

6. The battery pack according to claim 4, wherein the gas inlet (222) is located on an outer ring of the spiral structure, the gas outlet (223) is located on an inner ring of the spiral structure, and a flow cross section of each of separation flow channel sections (2211, 2212) decreases in order from being close to the gas inlet (222) to being away from the gas inlet (222).

7. The battery pack according to claim 6, wherein a flow cross section of the gas-solid separation flow channel (221) gradually decreases from an end close to the gas inlet (222) to an end away from the gas inlet (222).

8. The battery pack according to claim 1, wherein the upper cover (2) comprises an upper plate (21), a lower plate (24), and a flow channel combination plate sandwiched between the upper plate (21) and the lower plate (24), the gas-solid separation flow channel (221) is arranged in the flow channel combination plate, the lower plate (24) faces the box body (1), an exhaust structure (241) is arranged on a region of the lower plate (24) covering the cell installation compartment (11), and the exhaust structure (241) communicates with the gas inlet (222).

9. The battery pack according to claim 8, wherein the flow channel combination plate comprises a flow channel plate (22) and a buffer plate (23) arranged in a stack, the flow channel plate (22) is located between the upper plate (21) and the buffer plate (23), a flow channel groove (211) is arranged on a side of the flow channel plate (22) facing the buffer plate (23), the buffer plate (23) is connected to the flow channel plate (22), covers the flow channel groove (211), and is matched with the flow channel groove (211) to define the gas-solid separation flow channel (221), a gas outlet (223) end of the flow channel groove (211) penetrates a side of the flow channel plate (22) facing the upper plate (21) to form the gas outlet (223), and the buffer plate (23) is provided with a first ventilation opening (232) penetrating the buffer plate (23), and the first ventilation opening (232) overlaps at least a portion of a gas inlet (222) end of the flow channel groove (211) to define the gas inlet (222).

10. The battery pack according to claim 9, wherein a buffer compartment (231) is arranged on a side of the buffer plate (23) facing the lower plate (24) to cover the exhaust structure (241), and a gas inlet (222) end of the first ventilation opening (232) penetrates an inner wall of the buffer compartment (231) to communicate with the buffer compartment (231).

11. The battery pack according to claim 10, wherein each of the flow channel plate (22), the buffer plate (23), and the lower plate (24) are provided with a second ventilation opening (25) communicating with the exhaust compartment (12), a groove (211) is arranged on a side of the upper plate (21) facing the flow channel plate (22) to communicate the gas outlet (223) with the second ventilation opening (25) on the flow channel plate (22), and the flue gas in the cell installation compartment (11) is discharged through the exhaust structure (241) and sequentially flows through the buffer compartment (231), the first ventilation opening (232), and the gas-solid separation flow channel (221), and then enters the exhaust compartment (12) through the second ventilation opening (25).

12. The battery pack according to claim 8, wherein a mica plate (26) is arranged on a side of the lower plate (24) facing the box body (1), and the mica plate (26) is provided with a weakened structure (261) corresponding to the exhaust structure (241) and an opening (262) corresponding to the exhaust compartment (12).

13. The battery pack according to claim 1, wherein the box body (1) has a chamber, a partition (3) is installed in the chamber, the partition (3) divides the chamber into the cell installation compartment (11) and the exhaust compartment (12), and the cell installation compartment (11) and the exhaust compartment (12) communicate with each other only through the gas-solid separation flow channel (221) when the upper cover (2) covers the box body (1).

14. The battery pack according to claim 1, further comprising an explosion-proof valve (4), the explosion-proof valve (4) is installed on the box body (1) and is adapted to discharge gas in the exhaust compartment (12) when in an open state.

## Patentansprüche

1. Batteriepack, umfassend:
einen Gehäusekörper (1) mit einem Zelleneinbauraum (11) und einem Abführraum (12); und
eine obere Abdeckung (2), die den Gehäusekörper (1) abdeckt und einen Gas-Feststoff-Trennungs-Strömungskanal (221) aufweist, der angepasst ist, Gas zentrifugal von partikulärem Material im Rauchgas zu trennen, das durch den Gas-Feststoff-Trennungs-Strömungskanal (221) strömt, wobei ein Gaseinlass (222) des Gas-Feststoff-Trennungs-Strömungskanals (221) mit dem Zelleneinbauraum (11) in Verbindung steht und ein Gasauslass (223) des Gas-Feststoff-Trennungs-Strömungskanals (221) mit dem Abführraum (12) in Verbindung steht.

2. Batteriepack nach Anspruch 1, wobei der Gas-Feststoff-Trennungs-Strömungskanal (221) in einer Ebene angeordnet ist.

3. Batteriepack nach Anspruch 2, wobei die Ebene, in der sich der Gas-Feststoff-Trennungs-Strömungskanal (221) befindet, senkrecht zu einer Höhenrichtung des Gehäusekörpers (1) angeordnet ist.

4. Batteriepack nach einem der Ansprüche 1 bis 3, wobei der Gas-Feststoff-Trennungs-Strömungskanal (221) eine Vielzahl von miteinander in Verbindung stehenden Trennungs-Strömungskanalabschnitten (2211, 2212) umfasst und die Trennungs-Strömungskanalabschnitte (2211, 2212) der Reihe nach Ende an Ende verbunden sind, um eine Spiralstruktur zu bilden.

5. Batteriepack nach Anspruch 4, wobei die obere Abdeckung (2) Feststoffspeicherräume (224) aufweist, die den Trennungs-Strömungskanalabschnitten (2211, 2212) entsprechen, und jeder der Feststoffspeicherräume (224) an einer äußeren Umfangsseite eines entsprechenden der Trennungs-Strömungskanalabschnitte (2211, 2212) angeordnet ist und mit einem entsprechenden der Trennungs-Strömungskanalabschnitte (2211, 2212) in Verbindung steht.

6. Batteriepack nach Anspruch 4, wobei der Gaseinlass (222) an einem Außenring der Spiralstruktur angeordnet ist, der Gasauslass (223) an einem Innenring der Spiralstruktur angeordnet ist und ein Strömungsquerschnitt jedes der Trennungs-Strömungskanalabschnitte (2211, 2212) der Reihe nach von nahe an dem Gaseinlass (222) zu entfernt von dem Gaseinlass (222) abnimmt.

7. Batteriepack nach Anspruch 6, wobei der Strömungsquerschnitt des Gas-Feststoff-Trennungs-Strömungskanals (221) von einem Ende nahe dem Gaseinlass (222) zu einem Ende entfernt von dem Gaseinlass (222) allmählich abnimmt.

8. Batteriepack nach Anspruch 1, wobei die obere Abdeckung (2) eine obere Platte (21), eine untere Platte (24) und eine zwischen der oberen Platte (21) und der unteren Platte (24) angeordnete Strömungskanal-Kombinationsplatte umfasst, der Gas-Feststoff-Trennungs-Strömungskanal (221) in der Strömungskanal-Kombinationsplatte angeordnet ist, die untere Platte (24) dem Gehäusekörper (1) zugewandt ist, eine Abführstruktur (241) an einem den Zelleneinbauraum (11) abdeckenden Bereich der unteren Platte (24) angeordnet ist und die Abführstruktur (241) mit dem Gaseinlass (222) in Verbindung steht.

9. Batteriepack nach Anspruch 8, wobei die Strömungskanal-Kombinationsplatte eine Strömungskanalplatte (22) und eine Pufferplatte (23) umfasst, die in einem Stapel angeordnet sind, wobei die Strömungskanalplatte (22) zwischen der oberen Platte (21) und der Pufferplatte (23) angeordnet ist, eine Strömungskanalnut (211) an einer der Pufferplatte (23) zugewandten Seite der Strömungskanalplatte (22) angeordnet ist, die Pufferplatte (23) mit der Strömungskanalplatte (22) verbunden ist, die Strömungskanalnut (211) abdeckt und auf die Strömungskanalnut (211) abgestimmt ist, um den Gas-Feststoff-Trennungs-Strömungskanal (221) zu bilden, ein Ende der Strömungskanalnut (211) an dem Gasauslass (223) eine der oberen Platte (21) zugewandte Seite der Strömungskanalplatte (22) durchdringt, um den Gasauslass (223) zu bilden, und die Pufferplatte (23) mit einer ersten Belüftungsöffnung (232) versehen ist, die die Pufferplatte (23) durchdringt, und die erste Belüftungsöffnung (232) zumindest einen Abschnitt eines Endes der Strömungskanalnut (211) an dem Gaseinlass (222) überlappt, um den Gaseinlass (222) zu bilden.

10. Batteriepack nach Anspruch 9, wobei an einer der unteren Platte (24) zugewandten Seite der Pufferplatte (23) ein Pufferraum (231) angeordnet ist, um die Abführstruktur (241) abzudecken, und ein Ende der ersten Belüftungsöffnung (232) an dem Gaseinlass (222) eine Innenwand des Pufferraums (231) durchdringt, um mit dem Pufferraum (231) in Verbindung zu stehen.

11. Batteriepack nach Anspruch 10, wobei die Strömungskanalplatte (22), die Pufferplatte (23) und die untere Platte (24) jeweils mit einer zweiten Belüftungsöffnung (25) versehen sind, die mit dem Abführraum (12) in Verbindung steht, eine Nut (211) an einer der Strömungskanalplatte (22) zugewandten Seite der oberen Platte (21) angeordnet ist, um den Gasauslass (223) mit der zweiten Belüftungsöffnung (25) an der Strömungskanalplatte (22) zu verbinden, und das Rauchgas in dem Zelleneinbauraum (11) durch die Abführstruktur (241) abgeführt wird und der Reihe nach durch den Pufferraum (231), die erste Belüftungsöffnung (232) und den Gas-Feststoff-Trennungs-Strömungskanal (221) strömt und dann durch die zweite Belüftungsöffnung (25) in den Abführraum (12) eintritt.

12. Batteriepack nach Anspruch 8, wobei an einer dem Gehäusekörper (1) zugewandten Seite der unteren Platte (24) eine Glimmerplatte (26) angeordnet ist und die Glimmerplatte (26) mit einer der Abführstruktur (241) entsprechenden Schwächungsstruktur (261) und einer dem Abführraum (12) entsprechenden Öffnung (262) versehen ist.

13. Batteriepack nach Anspruch 1, wobei der Gehäusekörper (1) eine Kammer aufweist, eine Trennwand (3) in der Kammer eingebaut ist, die Trennwand (3) die Kammer in den Zelleneinbauraum (11) und den Abführraum (12) teilt und der Zelleneinbauraum (11) und der Abführraum (12) nur über den Gas-Feststoff-Trennungs-Strömungskanal (221) miteinander in Verbindung stehen, wenn die obere Abdeckung (2) den Gehäusekörper (1) abdeckt.

14. Batteriepack nach Anspruch 1, ferner umfassend ein explosionsgeschütztes Ventil (4), wobei das explosionsgeschützte Ventil (4) an dem Gehäusekörper (1) angebracht ist und angepasst ist, Gas aus dem Abführraum (12) abzulassen, wenn es sich in einem geöffneten Zustand befindet.

## Revendications

1. Bloc-batterie, comprenant :
un corps de boîtier (1) comportant un compartiment d'installation des cellules (11) et un compartiment d'évacuation (12) ; et
un couvercle supérieur (2) recouvrant le corps de boîtier (1) et comportant un canal d'écoulement de séparation gaz-solide (221) adapté pour séparer par centrifugation le gaz des particules présentes dans les gaz de combustion s'écoulant à travers le canal d'écoulement de séparation gaz-solide (221), dans lequel une entrée de gaz (222) du canal d'écoulement de séparation gaz-solide (221) communique avec le compartiment d'installation des cellules (11), et une sortie de gaz (223) du canal d'écoulement de séparation gaz-solide (221) communique avec le compartiment d'évacuation (12).

2. Bloc-batterie selon la revendication 1, dans lequel le canal d'écoulement de séparation gaz-solide (221) est situé sur un plan.

3. Bloc-batterie selon la revendication 2, dans lequel le plan sur lequel est situé le canal d'écoulement de séparation gaz-solide (221) est perpendiculaire à une direction verticale du corps de boîtier (1).

4. Bloc-batterie selon l'une quelconque des revendications 1 à 3, dans lequel le canal d'écoulement de séparation gaz-solide (221) comprend une pluralité de sections de canal d'écoulement de séparation (2211, 2212) communiquant entre elles, et les sections de canal d'écoulement de séparation (2211, 2212) sont reliées bout à bout les unes après les autres pour former une structure en spirale.

5. Bloc-batterie selon la revendication 4, dans lequel le couvercle supérieur (2) comporte des compartiments de stockage de matière solide (224) correspondant aux sections de canal d'écoulement de séparation (2211, 2212), et chacun des compartiments de stockage de matière solide (224) est situé sur un côté circonférentiel extérieur de l'une des sections de canal d'écoulement de séparation (2211, 2212) correspondante et communique avec l'une des sections de canal d'écoulement de séparation (2211, 2212) correspondante.

6. Bloc-batterie selon la revendication 4, dans lequel l'entrée de gaz (222) est située sur un anneau extérieur de la structure en spirale, la sortie de gaz (223) est située sur un anneau intérieur de la structure en spirale, et la section transversale d'écoulement de chacune des sections de canal de séparation (2211, 2212) diminue progressivement depuis la partie proche de l'entrée de gaz (222) jusqu'à la partie éloignée de l'entrée de gaz (222).

7. Bloc-batterie selon la revendication 6, dans lequel la section transversale canal d'écoulement de séparation gaz-solide (221) diminue progressivement depuis une extrémité proche de l'entrée de gaz (222) jusqu'à une extrémité éloignée de l'entrée de gaz (222).

8. Bloc-batterie selon la revendication 1, dans lequel le couvercle supérieur (2) comprend une plaque supérieure (21), une plaque inférieure (24) et une plaque combinée de canaux d'écoulement prise en sandwich entre la plaque supérieure (21) et la plaque inférieure (24), le canal d'écoulement de séparation gaz-solide (221) est agencé dans la plaque combinée de canaux d'écoulement, la plaque inférieure (24) est tournée vers le corps du boîtier (1), une structure d'évacuation (241) est agencée sur une région de la plaque inférieure (24) recouvrant le compartiment d'installation des cellules (11), et la structure d'évacuation (241) communique avec l'entrée de gaz (222).

9. Bloc-batterie selon la revendication 8, dans lequel la plaque combinée de canaux d'écoulement comprend une plaque à canaux d'écoulement (22) et une plaque tampon (23) disposées en empilement, la plaque à canaux d'écoulement (22) est située entre la plaque supérieure (21) et la plaque tampon (23), une rainure de canal d'écoulement (211) est disposée sur un côté de la plaque à canaux d'écoulement (22) faisant face à la plaque tampon (23), la plaque tampon (23) est reliée à la plaque à canaux d'écoulement (22), recouvre la rainure de canal d'écoulement (211), et s'aligne avec la rainure de canal d'écoulement (211) pour définir le canal d'écoulement de séparation gaz-solide (221), une extrémité de sortie de gaz (223) de la rainure de canal d'écoulement (211) traverse un côté de la plaque à canaux d'écoulement (22) tourné vers la plaque supérieure (21) pour former la sortie de gaz (223), et la plaque tampon (23) est pourvue d'une première ouverture de ventilation (232) traversant la plaque tampon (23), et la première ouverture de ventilation (232) recouvre au moins une partie d'une extrémité d'entrée de gaz (222) de la rainure de canal d'écoulement (211) pour définir l'entrée de gaz (222).

10. Bloc-batterie selon la revendication 9, dans lequel un compartiment tampon (231) est agencé sur un côté de la plaque tampon (23) faisant face à la plaque inférieure (24) afin de recouvrir la structure d'évacuation (241), et une extrémité d'entrée de gaz (222) de la première ouverture de ventilation (232) traverse une paroi interne du compartiment tampon (231) pour communiquer avec le compartiment tampon (231).

11. Bloc-batterie selon la revendication 10, dans lequel la plaque à canaux d'écoulement (22), la plaque tampon (23) et la plaque inférieure (24) sont chacune pourvues d'une deuxième ouverture de ventilation (25) communiquant avec le compartiment d'évacuation (12), une rainure (211) est disposée sur un côté de la plaque supérieure (21) faisant face à la plaque à canaux d'écoulement (22) afin de relier la sortie de gaz (223) à la deuxième ouverture de ventilation (25) sur la plaque à canaux d'écoulement (22), et les gaz de combustion présents dans le compartiment d'installation des cellules (11) sont évacués par la structure d'évacuation (241) et s'écoulent successivement à travers le compartiment tampon (231), la première ouverture de ventilation (232) et le canal d'écoulement de séparation gaz-solide (221), avant de pénétrer dans le compartiment d'évacuation (12) par la deuxième ouverture de ventilation (25).

12. Bloc-batterie selon la revendication 8, dans lequel une plaque de mica (26) est disposée sur un côté de la plaque inférieure (24) faisant face au corps de boîtier (1), et la plaque de mica (26) est pourvue d'une structure affaiblie (261) correspondant à la structure d'évacuation (241) et d'une ouverture (262) correspondant au compartiment d'évacuation (12).

13. Bloc-batterie selon la revendication 1, dans lequel le corps de boîtier (1) comporte une chambre, une cloison (3) est installée dans la chambre, la cloison (3) divise la chambre en un compartiment d'installation des cellules (11) et un compartiment d'évacuation (12), et le compartiment d'installation des cellules (11) et le compartiment d'évacuation (12) communiquent entre eux uniquement par l'intermédiaire du canal d'écoulement de séparation gaz-solide (221) lorsque le couvercle supérieur (2) recouvre le corps de boîtier (1).

14. Bloc-batterie selon la revendication 1, comprenant en outre une soupape antidéflagrante (4), ladite soupape antidéflagrante (4) étant installée sur le corps de boîtier (1) et étant adaptée pour évacuer le gaz présent dans le compartiment d'évacuation (12) lorsqu'elle est à l'état ouvert.
